(19) Europäisches Patentamt / European Patent Office / Office européen des brevets

(11) **EP 3 912 278 B1**

(12) **EUROPEAN PATENT SPECIFICATION**

(45) Date of publication and mention of the grant of the patent:
**18.09.2024 Bulletin 2024/38**

(21) Application number: **20701286.5**

(22) Date of filing: **17.01.2020**

(51) International Patent Classification (IPC):
**H04B 7/0452** (2017.01)

(52) Cooperative Patent Classification (CPC):
**H04B 7/0854; H04B 7/0452; H04B 7/0857**

(86) International application number:
**PCT/EP2020/051088**

(87) International publication number:
**WO 2020/148413 (23.07.2020 Gazette 2020/30)**

(54) **RECEIVER CIRCUITRY, INFRASTRUCTURE EQUIPMENT AND METHODS**

EMPFÄNGERSCHALTUNG, INFRASTRUKTURAUSRÜSTUNG UND VERFAHREN

CIRCUITS DE RÉCEPTEUR, ÉQUIPEMENT D'INFRASTRUCTURE ET PROCÉDÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2019 GB 201900762**

(43) Date of publication of application:
**24.11.2021 Bulletin 2021/47**

(73) Proprietors:
• **Sony Group Corporation**
**Minato-ku, Tokyo 108-0075 (JP)**
• **Sony Mobile Communications AB**
**221 88 Lund (SE)**
Designated Contracting States:
**AL**

(72) Inventors:
• **VIDAL ALEGRÍA, Juan**
**22644 Lund (SE)**
• **RODRÍGUEZ SÁNCHEZ, Jesús**
**22100 Lund (SE)**
• **RUSEK, Fredrik**
**24135 Eslöv (SE)**

(74) Representative: **Kraus & Lederer PartGmbB**
**Thomas-Wimmer-Ring 15**
**80539 München (DE)**

(56) References cited:
• **SANCHEZ JESUS RODRIGUEZ ET AL: "Fully Decentralized Massive MIMO Detection Based on Recursive Methods", 2018 IEEE INTERNATIONAL WORKSHOP ON SIGNAL PROCESSING SYSTEMS (SIPS), IEEE, 21 October 2018 (2018-10-21), pages 53 - 58, XP033490352, DOI: 10.1109/SIPS.2018.8598321**
• **KAIPENG LI ET AL: "Decentralized Baseband Processing for Massive MU-MIMO Systems", ARXIV.ORG, CORNELL UNIVERSITY LIBRARY, 201 OLIN LIBRARY CORNELL UNIVERSITY ITHACA, NY 14853, 15 February 2017 (2017-02-15), XP080745809, DOI: 10.1109/JETCAS.2017.2775151**
• **LI KAIPENG ET AL: "Decentralized equalization for massive MU-MIMO on FPGA", 2017 51ST ASILOMAR CONFERENCE ON SIGNALS, SYSTEMS, AND COMPUTERS, IEEE, 29 October 2017 (2017-10-29), pages 1532 - 1536, XP033346258, DOI: 10.1109/ACSSC.2017.8335613**

## Description

## BACKGROUND

### Field

The present disclosure relates to receivers for detecting data from radio signals received from communications devices using a plurality of antennas and methods of receiving. The receiver may form part of infrastructure equipment forming part of wireless communications networks.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

The document "Fully Decentralized Massive MIMO Detection Based on Recursive Methods", 2018 IEEE INTERNATIONAL WORKSHOP ON SIGNAL PROCESSING SYSTEMS (SIPS), IEEE, 21 October 2018 (2018-10-21), pages 53-58, XP033490352, discloses base station receiver chains for MIMO uplink according to two architectures: centralized and fully decentralized.

Third and fourth generation mobile telecommunication systems, such as those based on the 3GPP defined UMTS and Long Term Evolution (LTE) architecture, are able to support more sophisticated services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, may be expected to increase ever more rapidly.

Future wireless communications networks will be expected to support communications routinely and efficiently with a wider range of devices associated with a wider range of data traffic profiles and types than current systems are optimised to support. For example it is expected future wireless communications networks will be expected to efficiently support communications with devices including reduced complexity devices, machine type communication (MTC) devices, high resolution video displays, virtual reality headsets and so on.

In view of this there is expected to be a desire for future wireless communications networks, for example those which may be referred to as 5G or new radio (NR) system / new radio access technology (RAT) systems [1], as well as future iterations / releases of existing systems, to efficiently support connectivity for a wide range of devices associated with different applications and different characteristic data traffic profiles.

In view of the desire to support a wide variety of traffic profiles and system different types of wireless communications techniques are being explored. These include using multiple antennas to form an array which can be used to improve a likelihood of correctly communicating data. One such technique is referred to as Multiple Input Multiple Output (MIMO) in which a plurality of receiver antennas can be used to detect signals carrying the data. However adopting MIMO systems can create technical challenges.

## SUMMARY

The present disclosure can help address or mitigate at least some of the issues discussed above.

According to example embodiments there is provided a method of receiving data transmitted by a plurality of communications devices, the method comprising receiving at each of a plurality of M antennas reference signals transmitted by each of a plurality of K communications devices, and processing by each of a plurality of antenna modules the reference signals, each of the antenna modules being connected to a corresponding one of the plurality of antennas. The processing by each of the antenna module includes estimating for each of the K detected reference signals received from the K communications devices a sample of a radio channel through which the received signals have passed, generating for each of the K samples of the radio channel a KxK partial matrix forming a part of a signal processing matrix for performing zero forcing equalisation of the received signals, and transmitting via a communications interface the partial matrix KxK from each of the M antenna modules to a central processing unit. The method also includes detecting by the central processing unit the data from the received radio signals using the MxK equalisation matrix formed by combining the KxK partial matrices from each of the M antenna modules.

According to example embodiments the partial matrices are communicated separately from each antenna module, which may be done sequentially in each of a plurality of successive time periods. Accordingly there can be provided a significant reduction of a bandwidth requirement between the antenna modules and the central processing units.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and:

Figure 1 schematically represents some aspects of an LTE-type wireless telecommunication system which may be configured to operate in accordance with certain embodiments of the present disclosure;

Figure 2 schematically represents some aspects of a new radio access technology (RAT) wireless telecommunications system which may be configured to operate in accordance with certain embodiments of the present disclosure;

Figure 3 is a schematic block diagram of an example infrastructure equipment and communications device configured in accordance with example embodiments;

Figure 4 is a schematic illustration of a system in which communications devices are transmitting uplink signals to an infrastructure equipment; and

Figure 5 is a schematic illustration of an example receiver which forms part of the infrastructure equipment of Figure 4 according to an example embodiment.

## DETAILED DESCRIPTION OF THE EMBODIMENTS

### Long Term Evolution Advanced Radio Access Technology (4G)

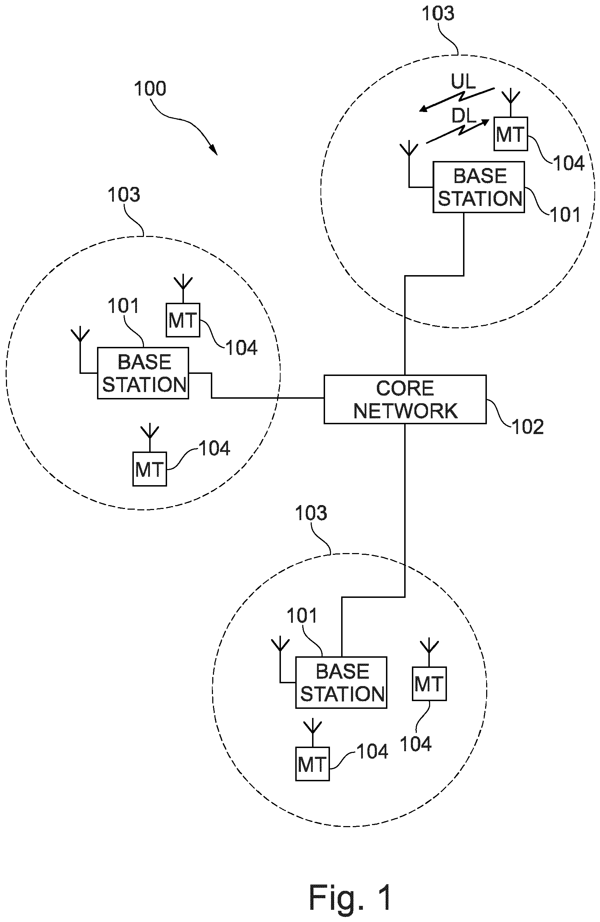

Figure 1 provides a schematic diagram illustrating some basic functionality of a mobile telecommunications network / system 100 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H. and Toskala A [9]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 100 includes a plurality of base stations 101 connected to a core network part 102. Each base station provides a coverage area 103 (e.g. a cell) within which data can be communicated to and from communications devices 104. Data is transmitted from the base stations 101 to the communications devices 104 within their respective coverage areas 103 via a radio downlink. Data is transmitted from the communications devices 104 to the base stations 101 via a radio uplink. The core network part 102 routes data to and from the communications devices 104 via the respective base stations 101 and provides functions such as authentication, mobility management, charging and so on. Communications devices may also be referred to as mobile stations, user equipment (UE), user terminals, mobile radios, terminal devices, and so forth. Base stations, which are an example of network infrastructure equipment / network access nodes, may also be referred to as transceiver stations / nodeBs / e-nodeBs, g-nodeBs (gNB) and so forth. In this regard different terminology is often associated with different generations of wireless telecommunications systems for elements providing broadly comparable functionality. However, example embodiments of the disclosure may be equally implemented in different generations of wireless telecommunications systems such as 5G or new radio as explained below, and for simplicity certain terminology may be used regardless of the underlying network architecture. That is to say, the use of a specific term in relation to certain example implementations is not intended to indicate these implementations are limited to a certain generation of network that may be most associated with that particular terminology.

**New Radio Access Technology (5G)**

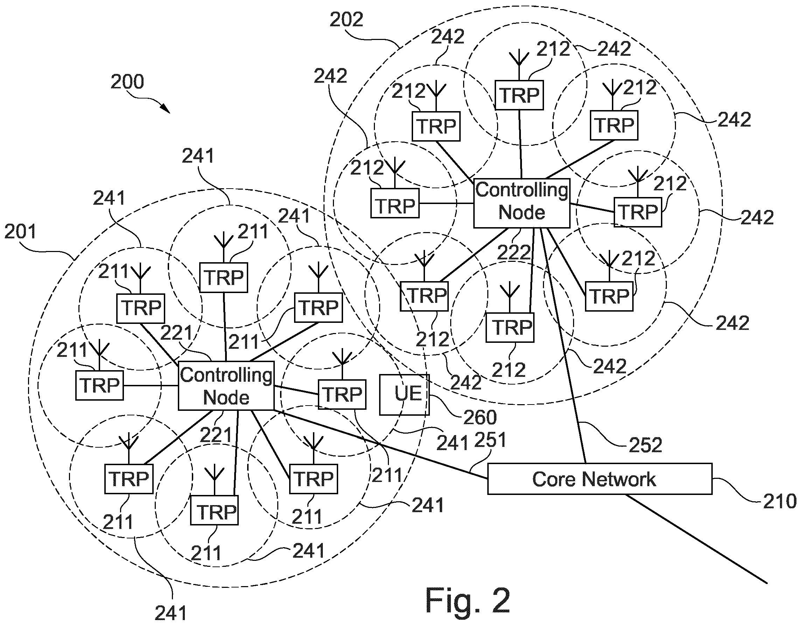

Figure 2 is a schematic diagram illustrating a network architecture for a new RAT wireless communications network / system 200 based on previously proposed approaches which may also be adapted to provide functionality in accordance with embodiments of the disclosure described herein. The new RAT network 200 represented in Figure 2 comprises a first communication cell 201 and a second communication cell 202. Each communication cell 201, 202, comprises a controlling node (centralised unit) 221, 222 in communication with a core network component 210 over a respective wired or wireless link 251, 252. The respective controlling nodes 221, 222 are also each in communication with a plurality of distributed units (radio access nodes / remote transmission and reception points (TRPs)) 211, 212 in their respective cells. Again, these communications may be over respective wired or wireless links. The distributed units 211, 212 are responsible for providing the radio access interface for communications devices connected to the network. Each distributed unit 211, 212 has a coverage area (radio access footprint) 241, 242 where the sum of the coverage areas of the distributed units under the control of a controlling node together define the coverage of the respective communication cells 201, 202. Each distributed unit 211, 212 includes transceiver circuitry for transmission and reception of wireless signals and processor circuitry configured to control the respective distributed units 211, 212.

In terms of broad top-level functionality, the core network component 210 of the new RAT communications network represented in Figure 2 may be broadly considered to correspond with the core network 102 represented in Figure 1, and the respective controlling nodes 221, 222 and their associated distributed units / TRPs 211, 212 may be broadly considered to provide functionality corresponding to the base stations 101 of Figure 1. The term network infrastructure equipment / access node may be used to encompass these elements and more conventional base station type elements of wireless communications systems. Depending on the application at hand the responsibility for scheduling transmissions which are scheduled on the radio interface between the respective distributed units and the communications devices may lie with the controlling node / centralised unit and / or the distributed units / TRPs.

A communications device or UE 260 is represented in Figure 2 within the coverage area of the first communication cell 201. This communications device 260 may thus exchange signalling with the first controlling node 221 in the first communication cell via one of the distributed units 211 associated with the first communication cell 201. In some cases communications for a given communications device are routed through only one of the distributed units, but it will be appreciated in some other implementations communications associated with a given communications device may be routed through more than one distributed unit, for example in a soft handover scenario and other scenarios.

In the example of Figure 2, two communication cells 201, 202 and one communications device 260 are shown for simplicity, but it will of course be appreciated that in practice the system may comprise a larger number of communication cells (each supported by a respective controlling node and plurality of distributed units) serving a larger number of communications devices.

It will further be appreciated that Figure 2 represents merely one example of a proposed architecture for a new RAT communications system in which approaches in accordance with the principles described herein may be adopted, and the functionality disclosed herein may also be applied in respect of wireless communications systems having different architectures.

Thus example embodiments of the disclosure as discussed herein may be implemented in wireless telecommunication systems / networks according to various different architectures, such as the example architectures shown in Figures 1 and 2. It will thus be appreciated the specific wireless communications architecture in any given implementation is not of primary significance to the principles described herein. In this regard, example embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 101 as shown in Figure 1 which is adapted to provide functionality in accordance with the principles described herein, and in other examples the network infrastructure equipment / access node may comprise a control unit / controlling node 221, 222 and / or a TRP 211, 212 of the kind shown in Figure 2 which is adapted to provide functionality in accordance with the principles described herein.

A better appreciation provided by the example embodiments can be gained from reviewing a proposed wireless access interface according to 3GPP LTE/4G and NR/5G can be found in [2] and [3]. However it will be appreciated that the wireless access interface provides physical communications resources including shared channels for both uplink and the downlink which may be accessed by communicating appropriate control signalling as those acquainted with LTE will appreciate. Equally a wireless access interface for the 5G Standard as represented in Figure 2 may be similarly formed and may use OFDM on the downlink and OFDM or SC-FDMA on the uplink.

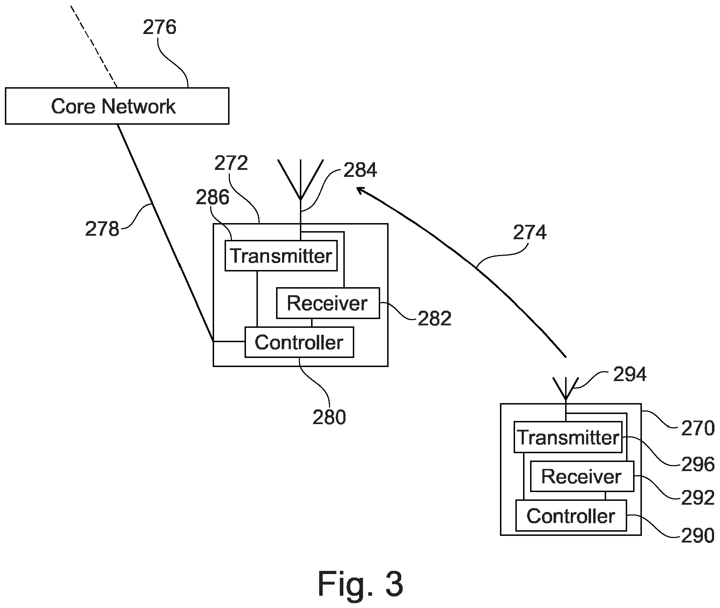

A more detailed illustration of a UE 270 and an example network infrastructure equipment 272, which may be thought of as a gNB 101 or a combination of a controlling node 221 and TRP 211, is presented in Figure 3. As shown in Figure 3, the UE 270 is shown to transmit uplink data to the infrastructure equipment 272 via grant free resources of a wireless access interface as illustrated generally by an arrow 274. As with Figures 1 and 2, the infrastructure equipment 272 is connected to a core network 276 via an interface 278 to a controller 280 of the infrastructure equipment 272. The infrastructure equipment 272 includes a receiver 282 connected to an antenna 284 and a transmitter 286 connected to the antenna 284. Correspondingly, the UE 270 includes a controller 290 connected to a receiver 292 which receives signals from an antenna 294 and a transmitter 296 also connected to the antenna 294.

The controller 280 is configured to control the infrastructure equipment 272 and may comprise processor circuitry which may in turn comprise various sub-units / sub-circuits for providing functionality as explained further herein. These sub-units may be implemented as discrete hardware elements or as appropriately configured functions of the processor circuitry. Thus the controller 280 may comprise circuitry which is suitably configured / programmed to provide the desired functionality using conventional programming / configuration techniques for equipment in wireless telecommunications systems. The transmitter 286 and the receiver 282 may comprise signal processing and radio frequency filters, amplifiers and circuitry in accordance with conventional arrangements. The transmitter 286, the receiver 282 and the controller 280 are schematically shown in Figure 3 as separate elements for ease of representation. However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the infrastructure equipment 272 will in general comprise various other elements associated with its operating functionality.

Correspondingly, the controller 290 of the UE 270 is configured to control the transmitter 296 and the receiver 292 and may comprise processor circuitry which may in turn comprise various sub-units / sub-circuits for providing functionality as explained further herein. These sub-units may be implemented as discrete hardware elements or as appropriately configured functions of the processor circuitry. Thus the controller 290 may comprise circuitry which is suitably configured / programmed to provide the desired functionality using conventional programming / configuration techniques for equipment in wireless telecommunications systems. Likewise, the transmitter 296 and the receiver 292 may comprise signal processing and radio frequency filters, amplifiers and circuitry in accordance with conventional arrangements. The transmitter 296, receiver 292 and controller 290 are schematically shown in Figure 3 as separate elements for ease of representation. However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the communications device 270 will in general comprise various other elements associated with its operating functionality, for example a power source, user interface, and so forth, but these are not shown in Figure 3 in the interests of simplicity.

## Massive MIMO Techniques

As those familiar with radio access technologies will appreciate, Multiple Input Multiple Output (MIMO) systems are known for use in radio communications in order to improve a likelihood of correctly receiving data transmitted from a communications device. There are various forms of MIMO systems which also conclude Single Input Multiple Output (SIMO) and Multiple Input Single Output (MISO) systems. MIMO systems are particularly useful where the signals transmitted are carried by a wireless access interface configured to support Orthogonal Frequency Division Multiple access.

Massive MIMO systems for uplink detection in mobile communications systems represent an arrangement in which a very large number of antennas are used at the receiver in order to create a much more accurate estimate of a transmission channel formed from channel state information (CSI). With massive MIMO systems, the number of antennas may be hundreds or thousands and these are used in combination for received signals in order to build up a much more detailed estimate of a channel impulse response based on the channel state information. According to this arrangement base band data from all antenna modules is routed to a central processing unit in order to be processed. The central processing unit processes that base band data so that channel estimates for each of the antennas can be combined in order to improve a detection process. Typically the detection process requires a training or estimation phase in which channel state information acquired from channel reference symbols or pilot symbols are used to perform a sample of each channel at each antenna which are then combined to generate a highly accurate estimate of the channel. Data is then recovered from received signals in a detection phase by applying the channel estimate to the received signals in order to equalise the signals and recover the data. The detection phase may also be called a payload data phase.

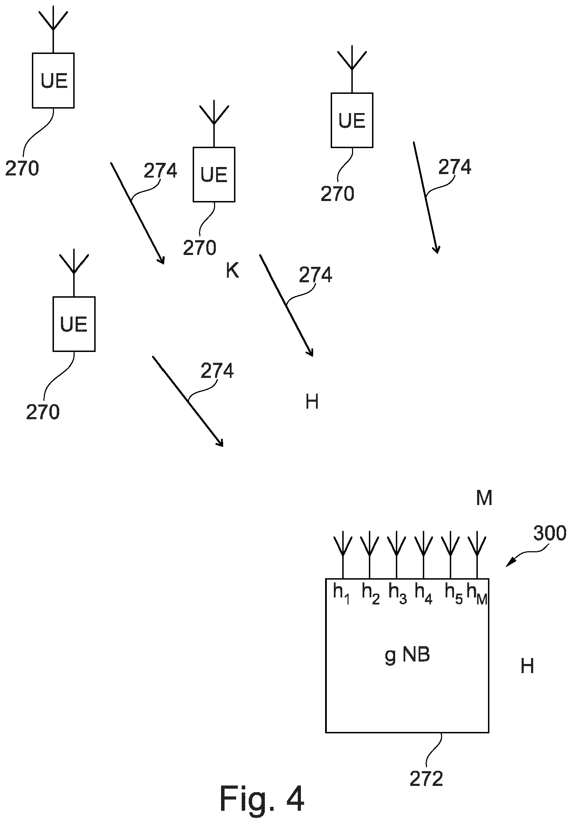

Figure 4 provides an example of such a massive MIMO system. As shown in Figure 4 each of the UEs shown in Figures 2, 3 and 4 are transmitting data as uplink signals to a base station or gNB 272. The gNB 272 is provided with a plurality of antennas 300 which form an antenna array 300. As indicated above, for a massive MIMO scheme the number of antennas in the antenna array may be hundreds or thousands although only six antennas 300 are shown which are numbered 1 to N. In the following description the number of antennas in the massive antenna array 300 is designated M.

Embodiments of the present techniques relate to a massive MIMO scheme in which the formation of a signal processing matrix (Gramian matrix G) for implementing a zero forcing equalisation scheme for a MIMO system is partially decentralised in that the formation of the signal processing matrix is partially formed in signal processing modules associated with each antenna. The signal processing modules are referred to as antenna modules. As explained in [1], as a result of the large number of antennas which are generating signal processing samples, a conventional arrangement is to transmit each of the samples to a central processing unit where the signal processing matrix for equalisation is formed. The signal processing matrix is known as a Gramian matrix, which is required to perform equalisation according to the channel state estimates for each of the antennas. According to a centralised architecture, the central processing unit within a receiver in the gNB collects all channel state information generated from each of the antenna modules which allows an optimal estimation of the signal processing matrix required to perform equalisation of the received signals. The central processing unit also detects and decodes the samples of the base band signal samples to recover the data. However each of the antenna modules can perform processing of the radio frequency signals, that is radio frequency signal filters and down converters as well as analogue to digital converters and OFDM processing. As indicated above, because of the large number of antennas, the amount of data required to be communicated on an interface between the antenna modules and the central processing unit, requires a significant bandwidth. The bandwidth required is as a function of number of antennas M. In contrast to a centralised architecture, a decentralised system provides for processing the channel state information locally at the antenna modules. However according to this arrangement, the full channel state information is not available.

Embodiments of the present technique can provide an arrangement in which formation of the signal processing matrix required for equalising uplink radio signals is partially decentralised thereby substantially reducing the bandwidth requirements for connecting the antenna modules to the central processing unit. Moreover, each of the plurality of partial matrices is broken up into K columns and transmitted in K time slots from the antenna modules to the central processing unit thereby reducing the bandwidth requirement for communicating signal samples in order to generate the signal processing matrix for equalisation.

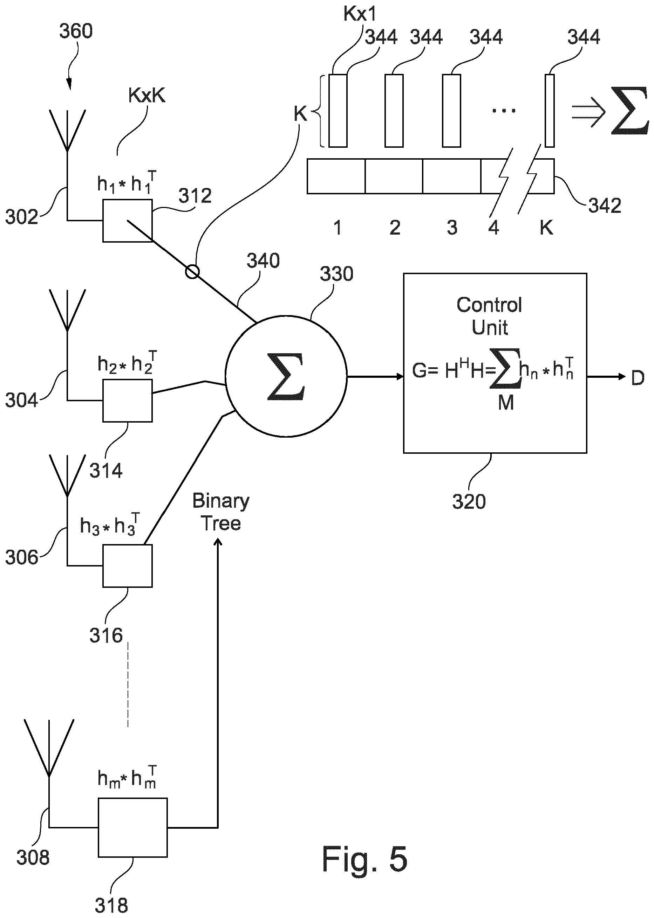

Figure 5 provides an example embodiment of the present technique. As shown in Figure 5, the antenna array 300 comprises a number of antennas N but for illustration purposes only, only four antennas numbered (1, 2, 3 and m) are shown 302, 304, 306, 308. Each of the antennas 302, 304, 306, 308 includes an antenna module 312, 314, 316, 318. Each of the antenna modules 312-318 is connected to a central processing unit 320. The connection between the antenna modules 312-316 to the central processing unit 320 may be via formed in various ways and is represented generally as a formation point 330. In some examples the formation point 330 may be formed as a summation point 330. The corresponding circuitry may be called summation point circuitry. In particular the summation point 330 or the summation point circuitry may be formed as a binary tree so that the output from one antenna module is combined with the output from its neighbour and thereafter combination is performed according to a tree structure.

As indicated above, in order to detect and recover data transmitted on an uplink using a massive MIMO system, a training phase is first performed which estimates the channel and thereafter a data detection phase is performed in which the channel is equalised and the data is recovered from the received OFDM symbols carrying the data. In particular, the method may include re-using the same summation point circuitry which has been used during a training phase during a data detection phase. The data detection phase may also be called payload data phase. When operating in the payload data phase values from each of the M antenna modules may be combined using the summation point circuitry and error control decoding and/or Hybrid Automatic Repeat Request based on the combined values may be implemented.

According to example embodiments, a zero forcing equalisation technique is used which requires the formation of Gramian matrix $G=H^H H$. In accordance with example embodiments the Gramian matrix is formed at the central processing unit 320 by combining partial versions of the Gramian matrix $h_m * h_m^T$ formed at each of the N antennas modules. Each of the antenna modules generates K samples of the channel from reference symbols or pilot symbols transmitted with the uplink data. In accordance with the present embodiments K is the number of UEs 270 shown in Figure 4. For each of the K UEs 270, K signal samples are generated for each of the antennas. Each of the antenna modules 312-318 then forms a KxK matrix $h_m * h_m^T$ which is a matrix with K columns and K samples. The reference symbols or pilots, which may be considered as reference signals, may be discarded at each of the plurality of antenna modules upon said generating of the respective KxK partial matrix, while the KxK partial matrix may be stored for transmission to the central processing unit (320).

It has been found that transmitting each of the K columns of the K complex samples of the KxK partial matrix sequentially may allow for dispensing with a dedicated circuitry for combining the partial matrix at the central processing unit. Instead, circuitry also used during a payload data phase may be used. This enables to re-use such circuitry in both the payload data phase, as well as the training phase. Typically, each antenna contributes, at the very minimum, with a scalar value to the payload analysed by the central processing unit, which may be responsible for error control decoding, HARQ, etc. These individual antenna contributions are typically summed up before being formally presented to the central processing unit to maintain low interconnection bandwidth.

As shown in Figure 5 schematically for one of the antenna modules 312 on an interface 340, each of the K columns 344 of K samples is transmitted in K timeslots as represented by boxes 342 with the columns represented as long boxes 344. As explained above, the formation point 330 may be arranged in the form of a binary true, each of the columns is summed with the columns from other sub-matrices generated by the other antenna modules so that at the central processing unit 320 the samples are received over the K timeslots which forms during transmission the Gramian equalisation matrix which can then be applied to equalise the data. In particular, the same formation point 330 used during a payload data phase may also be used for the transmission of the partial matrices.

In an embodiment, the signal processing matrix may be an estimate of the Gramian equalisation matrix formed by estimates of the KxK partial matrices of the Gramian partial matrices, wherein the estimates of the KxK partial matrices are formed locally at the antenna modules. By using the estimate, a noise contribution can be taken into account. The noise contribution can be described by a noise vector associated with each of the M antenna elements.

Embodiments of the present technique therefore provide an arrangement in which the antenna modules 312-318 are adapted to generate a partial or local signal processing matrix which is then communicated as a sequences of columns over K timeslots to the central processing unit 320 which combines the partial matrices into the signal processing or Gramian matrix to perform zero forcing equalisation of the received data signals.

It will further be appreciated that the principles described herein are not applicable only to LTE-based wireless telecommunications systems, but are applicable for any type of wireless telecommunications system that supports a random access procedure comprising an exchange of random access procedure messages between a communications device and a base station.

Further particular and preferred aspects of the present invention are set out in the accompanying independent and dependent claims. It will be appreciated that features of the dependent claims may be combined with features of the independent claims in combinations other than those explicitly set out in the claims.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, define, in part, the scope of the foregoing claim terminology such that no inventive subject matter is dedicated to the public.

Respective features of the present disclosure are defined by the following numbered paragraphs: Paragraph 1.

Further particular and preferred aspects of the present invention are set out in the accompanying independent and dependent claims. It will be appreciated that features of the dependent claims may be combined with features of the independent claims in combinations other than those explicitly set out in the claims.

## References

[1] Sanchez J R, Rusek F, Alegria J V, "Channel estimation for decentralized Massive MIMO systems, as attached below

[8] 3GPP TS 38.300 v. 15.2.0 "NR; NR and NG-RAN Overall Description; Stage 2(Release 15)", June 2018

[9] Holma H. and Toskala A, "LTE for UMTS OFDMA and SC-FDMA based radio access", John Wiley and Sons, 2009

*Abstract-Algorithms for Massive MIMO uplink detection are typically based on a centralized approach, by which baseband data from all antenna modules need to be routed to a central node in order to be processed. In the case of Massive MIMO, where hundreds or thousands of antennas are expected in the base-station, this architecture leads to a bottleneck, with critical limitations in terms of interconnection bandwidth requirements. Recently, decentralized architectures have been proposed to alleviate this problem, where channel-state-information (CSI) is obtained locally in each antenna node and not shared, in order to reduce bandwidth. On the other hand, it is well known that Massive MIMO performance is very sensitive to the CSI estimate. However, in the literature, ideal CSI is typically assumed in decentralized systems, which is not only far from reality but also limits the generality of the analysis. This paper proposes a decentralized (a term that will be defined in the main body of the paper) architecture with the following main features: (i) the channel matrix is not made available at any single node, (ii) there is no inter-communication among antennas, (iii) the architecture used during the payload data phase, is reused to provide a certain statistic to a processing node, (iv) a non-standard channel*

**estimation problem based on said statistic arises, (v) a matrix inversion is needed (for zero-forcing purposes) at said processing node. A hefty share of the paper is devoted to (iv) above.** *Index* **Terms-Massive MIMO, decentralized, detection, zero-forcing, wishart, MMSE, ML, MAP.**

## I. INTRODUCTION

Massive MIMO is one of the most relevant technologies in wireless communications [1]. High spectral efficiency and improved link reliability are among the key features of this technology, making it a key enabler to exploit spatial diversity far beyond traditional MIMO systems by employing a large scale antenna array with hundreds or thousands of elements. This allows for unprecedented spatial resolution and high spectral efficiency, while providing simultaneous service to several users within the same time-frequency resource.

Despite all advantages of Massive MIMO, there are challenges from an implementation point of view. Uplink detection algorithms like zero-forcing (ZF) typically rely on a centralized architecture, where baseband samples and channel state information (CSI) are collected in a central processing node for further matrix inversion and detection. Physical connections are needed between antenna modules and the central node to carry the required data. This approach, that is perfectly valid for a relatively low number of antennas, shows critical limitations when the array size increases, with the interconnection bandwidth as the main bottleneck in the system.

Initial Massive MIMO prototypes [2] [3] were the first to face this problem and solutions were proposed, but these were not optimal [4]. There are recent proposals to address this limitation, such as [4] and [5]. In [5], a partial decentralized (PD) solution is put forth, which is able to achieve exactly the same estimates (and therefore performance) as linear detectors such as maximum ratio combing (MRC), ZF and L-MMSE. In order to achieve this, obtaining CSI is required prior to detection. However, due to scalability reasons, decentralized architectures do not allow to collect all CSI at the same point and that limits the quality of channel estimates.

It is recognized that the full benefits of massive MIMO, such as high spectrum efficiency, heavily rely on accurate CSI estimation [6]. Non-ideal CSI cannot reach perfect inter-user interference (IUI) cancellation, with negative consequences, especially as the number of users grows. Unfortunately, channel estimation is not typically covered in the decentralized debate and ideal CSI is always assumed to be available.

In this work we argue that much of the centralized vs. non-centralized discussion is unnecessary. In short, our arguments are as follows: The non-centralized discussion seems to be revolving around the training phase in general, and to avoid collecting full CSI at any given node in particular. However, there is also a payload data phase, and during this phase it can be assumed that each antenna contributes, at the very minimum, with a scalar value to a central processing unit (responsible for, e.g., error control decoding, HARQ, etc.). In order to maintain low interconnection bandwidth, these antenna contributions are likely to be summed up before being formally presented to the central processing unit. That said, we observe that there is an easy way to transfer a statistic that is sufficient for demodulation purposes, using the same circuitry used during the payload data phase. Such a method can, according to a separate discussion in the next section, be classified as non-centralized since it 1) does not store the full CSI at any given node, and 2) it does not expand the interconnections between antennas and processing unit beyond what is needed for payload data. At the central processing node, channel estimation and channel inversion remains, but we argue that these are fairly minor tasks compared to other baseband tasks needed at such a node. The main message we try to convey is that, in our view, meeting 1) and 2) is sufficient for a scheme to be classified as non-centralized.

The remainder of the paper is organized as follows. A system model and a review of linear detection methods in Massive MIMO is presented in section II. In III we compare centralized and decentralized systems and motivates the research done in this article. The proposed channel estimation method and the different estimators are presented in IV. Results are presented in V. Finally, section VI presents the conclusions of this publication.

Notation: In this paper, lowercase, bold lowercase and upper bold face letters stand for scalar, column vector and matrix, respectively. The operations $(.)^T$, $(.)^*$ and $(.)^H$ denote transpose, conjugate and conjugate transpose respectively. Vectors are assumed to be columns. $_0\tilde{F}_1$ is the hypergeometrical function of matrix argument defined as in [7], $\tilde{\Gamma}_m$ denotes the complex multivariate gamma function. $|\mathbf{A}|$, $\text{tr}(\mathbf{A})$ and $\text{eig}(\mathbf{A})$ represents the determinant, trace and eigenvalues of matrix $\mathbf{A}$ respectively.

## II. SYSTEM MODEL

For uplink detection, we consider a scenario with K single-antenna users transmitting to a base-station (BS) with an antenna array with M elements through a flat-fading channel. The input-output relation is

$$\mathbf{y} = \mathbf{H}\mathbf{x} + \mathbf{n}, \qquad (1)$$

where $\mathbf{y}$ is the $M \times 1$ received vector, $\mathbf{x}$ is the transmitted user data vector $(K \times 1)$, $\mathbf{H} = [\mathbf{h}_1\, \mathbf{h}_2 \cdots \mathbf{h}_M]^T$ is the channel matrix $(M \times K)$, where $\mathbf{h}_m$ is a $K \times 1$ vector representing CSI at antenna $m$, and $\mathbf{n}$ a noise vector $(M \times 1)$ with $N_0$ as variance.

*A. Linear Processing in massive MIMO*

We focus only on linear detectors, because they show close to optimal performance in Massive MIMO regime [8] while exhibiting low complexity.

A linear equalizer provides an estimate of $\mathbf{x}$, $\hat{\mathbf{x}}$, by applying the equalizer filter matrix $\mathbf{W}$ to the vector of observations, $\mathbf{y}$, as follows

$$\hat{\mathbf{x}} = \mathbf{W}\mathbf{y}, \qquad (2)$$

where $\mathbf{W} = [\mathbf{w}_1\, \mathbf{w}_2 \cdots \mathbf{w}_K]^T$ is a $K \times M$ complex matrix. $\mathbf{w}_m$ is a $K \times 1$ equalizer vector local to antenna m.

We consider the conventional linear detectors maximum-ratio combining (MRC) and zero-forcing (ZF), whose equalizer matrix is defined as

$$\mathbf{W} = \begin{cases} \mathbf{H}^H & \text{for MRC} \\ \mathbf{G}^{-1}\mathbf{H}^H & \text{for ZF,} \end{cases} \qquad (3)$$

where $\mathbf{G} = \mathbf{H}^H\mathbf{H}$ is the Gramian matrix, which can be also expressed as $\mathbf{G} = \sum_{m=1}^{M} \mathbf{G}_M$, where $\mathbf{G}_m = \mathbf{h}_m^* \mathbf{h}_m^T$ is a $K \times K$ partial Gramian matrix with local CSI of each antenna module. It is important to note that matrix $\mathbf{W}$ is valid during a Coherence Block (CB) of the channel, representing a frequency-time region where the channel can be considered approximately constant.

MRC provides complete decentralized processing, allowing each antenna node to obtain a local equalization vector from local CSI. ZF, on the other hand, requires the system to collect all CSI from all antennas in a central processing node, for further matrix inversion. It is well known that ZF provides superior performance over MRC due to perfect inter-user interference cancellation capabilities at the cost of an increment of inter-connection bandwidth and processing requirements. However, those extra requirements are despicable when compared to the overall physical layer requirements.

## III. DECENTRALIZED VS CENTRALIZED: CURRENT DEBATE

Linear processing in Massive MIMO was presented in the previous section together with two detection methods. These two schemes can be implemented in centralized or decentralized systems.

In centralized architectures, the central unit collects all CSI from all antenna modules, represented by the matrix $\mathbf{H}$, which allows optimal estimation of matrix $\mathbf{W}$. Apart from that, the central unit tasks also includes detection and decoding. Processing in the antenna side comprises RF, ADC and optionally OFDM processing (FFT). The amount of interconnection data-rate between antennas and the central unit depends on M, which is an important limitation in Massive MIMO systems where a large number of antenna elements is expected.

There is nowadays a trend towards decentralized systems in order to allow scalability of the system. Decentralized systems perform antenna processing locally, including CSI acquisition and partial detection. One of the key characteristics of this type of systems is that full CSI is not available at any point. The central node is left for the remaining parts of the per-user processing (symbol de-mapping and decoding).

In both types of architectures, antenna modules need to be connected to the central node. In decentralized systems, this connection is used to transfer partial detection data, of a volume that is independent of M. This existing connection may be used also to transfer additional data which allows to improve the detection performance. This is the case of ZF, where the Gramian matrix is collected in the central node for further inversion. During a channel CB, antenna-nodes transfer two types of data to central node, partial Gramian ($\mathbf{G}_m$) and partial detection data. The former one, available after pilots are received and channel estimation is completed in the antenna modules, and the last one after the reception of each data symbol. As presented in section II-A, a partial Gramian matrix ($\mathbf{G}_m$) consists of $K \times K$ complex elements which are assumed to be transmitted by each antenna within one OFDM symbol to avoid buffering, reduce memory requirements and latency. The outcome of the detection process is K complex numbers (one per transmitting user) per subcarrier under MU-MIMO. We also assume to have K subcarriers per CB and per OFDM symbol, which corresponds to a $K \times K$ complex elements after detection. As we can observe there is no need to increase the inter-connection data-rate requirements of the existing connection network for the transmission of the partial Gramian matrices. Furthermore, the matrix inversion required in ZF has a complexity that is far below other processing tasks of the central processing node such as decoding, so we regard the computational overhead to be negligible. Once the Gramian matrix **G** is inverted, it can either be stored and used in the central node during data detection, increasing the memory and computational requirements of this node [5], or distribute back to the antenna modules so they can compute locally their corresponding vector, which increase traffic and latency [9]. The selection of a strategy is out of scope for this work and is a decision that depends on the specific application and system requirements. In this paper we propose a channel estimator based on the built Gramian, which delivers an estimate of **G**. We demonstrate that carrying out channel estimation in a centralized way outperforms its decentralized counterpart.

IV. CHANNEL ESTIMATION

A first channel estimation is performed per-antenna basis, based on pilots sent by users. Recalling the MIMO equation,

$$\mathbf{y} = \mathbf{Hx} + \mathbf{n}, \qquad (4)$$

the goal of the channel estimation phase is to obtain an estimate of **H**. If users send orthogonal pilots, we can define the $K \times K$ matrix $\mathbf{P} = [\mathbf{p}_1, \mathbf{p}_2, \cdots, \mathbf{p}_K]$, where $\mathbf{p}_k$ is defined as a $K \times 1$ vector of the following form

$$\mathbf{p}_k(i) \triangleq \begin{cases} p_k & \text{if } k = i \\ 0 & \text{if } k \neq i, \end{cases}$$

where $p_k$ is a complex-number known by the BS which represents the pilot from k-th user. Based on this definition, the Mx $K$ BS observation matrix **Z** can be described by

$$\mathbf{Z} = \mathbf{HP} + \mathbf{N}, \qquad (5)$$

where $\mathbf{Z} = [\mathbf{z}_1, \mathbf{z}_2, \cdots, \mathbf{z}_M]^T$, $\mathbf{z}_m$ being the $K \times 1$ observation vector at antenna m. $\mathbf{N} = [\mathbf{n}1, \mathbf{n}2, \cdots, \mathbf{n}_M]^T$ represents the noise term as a $M \times K$ matrix , where $\mathbf{n}_m$ is the $K \times 1$ noise vector corresponding to the same antenna. For one of the antennas, equation (5) boils down to

$$\mathbf{z}_m = \mathbf{Ph}_m + \mathbf{n}_m,$$

and channel estimation is performed locally based on the observation vector $\mathbf{z}_m$.
The Least Squares (LS) estimate of **H** can be obtained as follows

$$\widehat{\mathbf{H}}_{\mathrm{LS}} = \mathbf{ZP}^{-1}, \qquad (6)$$

which can be easily computed in each antenna node by exploiting the fact that **P** is a diagonal matrix as follows

$$\begin{aligned} \widehat{\mathbf{h}}_m(k) &= \frac{\mathbf{z}_m(k)}{p_k} \\ &= \mathbf{h}_m(k) + \frac{\mathbf{n}_m(k)}{p_k}, \quad k = 1 \ldots K, \end{aligned} \qquad (7)$$

where $\hat{\mathbf{h}}_m$ is obtained locally in each antenna-node. For the simple case that $p_k = 1$, $\forall k$, then $\mathbf{P} = \mathbf{I}$ and $\hat{\mathbf{H}}_{LS} = \mathbf{Z}$.

Second step in channel estimation is to obtain matrix $\mathbf{R} = \hat{\mathbf{H}}_{LS}^{H}\hat{\mathbf{H}}_{LS}$. In order to do that, each antenna can compute the partial term $\mathbf{R}_m = \hat{\mathbf{h}}_m^{*}\hat{\mathbf{h}}_m^{T}$, which is a $K \times K$ matrix, and therefore $\mathbf{R} = \sum_{m=1}^{M} \mathbf{R}_m$. This addition can be carried out by exploiting the existing antenna-nodes connections needed for data detection.

In next subsections we obtain the PDF of **R** and **G**, and the results will be used to formulate estimators of **G**, which outperform the one-step channel estimation based solely on the decentralized LS channel estimate derived from (6).

*A. Derivation of conditional PDFs*

If **Z** is an $M \times K$ complex matrix whose rows follow a multivariate normal distribution as in, with covariance matrix $\Sigma$ and (**Z**) = **H**, then the distribution of $\mathbf{R} = \mathbf{Z}^H\mathbf{Z}$ is noncentral Wishart and is defined as [7]

$$p(\mathbf{R}|\mathbf{G}) = e^{-\mathrm{tr}(\Sigma^{-1}\mathbf{G})}{}_0\tilde{F}_1(M; \Sigma^{-1}\mathbf{G}\Sigma^{-1}\mathbf{R})$$
$$\times \frac{1}{\tilde{\Gamma}_K(M)|\Sigma|^M}e^{-\mathrm{tr}(\Sigma^{-1}\mathbf{R})}|\mathbf{R}|^{M-K}, \qquad (8)$$

and noted as $\mathbf{R}|\mathbf{G} \sim W_K(M, \Sigma, \Sigma^{-1}G)$. The matrix $\Sigma^{-1}G$ is referred to as noncentrality matrix in most literature.

The marginal PDF for matrix G becomes a central Wishart and its expression is as follows

$$p(\mathbf{G}) = \frac{1}{\tilde{\Gamma}_K(M)|\mathbf{C}|^M}e^{-\mathrm{tr}(\mathbf{C}^{-1}\mathbf{G})}|\mathbf{G}|^{M-K}, \qquad (9)$$

and noted as $\mathbf{G} \sim W_K(M, \mathbf{C})$, where **C** is the covariance matrix of the rows of **H**.

The marginal PDF of R can be obtained as

$$p(\mathbf{R}) = \int f(\mathbf{R}|\mathbf{G})f(\mathbf{G})d\mathbf{G}$$
$$= \frac{1}{\tilde{\Gamma}_K(M)|\Sigma|^M}e^{-\mathrm{tr}(\Sigma^{-1}\mathbf{R})}|\mathbf{R}|^{M-K}$$
$$\times \frac{1}{\tilde{\Gamma}_K(M)|\mathbf{C}|^M}\int e^{-tr[(\Sigma^{-1}+\mathbf{C}^{-1})\mathbf{G}]}|\mathbf{G}|^{M-K}$$
$$\times {}_0\tilde{F}_1(M; \Sigma^{-1}\mathbf{G}\Sigma^{-1}\mathbf{R})d G.$$

Introducing the matrix **A** such that $\mathbf{A}^{-1}\Sigma^{-1} = \Sigma^{-1} + \mathbf{C}^{-1}$, which translates to $\mathbf{A} = (\mathbf{I} + \mathbf{C}^{-1}\Sigma)^{-1}$, leads to

$$p(\mathbf{R}) = \frac{|\Sigma\mathbf{A}|^M}{\tilde{\Gamma}_K(M)|\Sigma|^M|\mathbf{C}|^M}e^{-tr[\Sigma^{-1}\mathbf{R}(\mathbf{I}-\mathbf{A})]}|\mathbf{R}|^{M-K}$$
$$\times \int \frac{1}{\tilde{\Gamma}_K(M)|\Sigma\mathbf{A}|^M}e^{-\mathrm{tr}(\Sigma^{-1}\mathbf{R}\mathbf{A})}e^{-\mathrm{tr}(\mathbf{A}^{-1}\Sigma^{-1}\mathbf{G})}$$
$$\times |\mathbf{G}|^{M-K}{}_0\tilde{F}_1(M; \Sigma^{-1}\mathbf{R}\Sigma^{-1}\mathbf{G})d G, \qquad (10)$$

where we used the fact that eig(**PXPY**) = eig(**PYPX**) holds for any complex matrix P, being **X** and **Y** two Hermitian complex matrices, and therefore ${}_0\tilde{F}_1(M; \mathbf{PXPY}) = {}_0\tilde{F}_1(M; \mathbf{PYPX})$. In our case $\mathbf{P} = \Sigma^{-1}$, $\mathbf{X} = \mathbf{G}$ and $\mathbf{Y} = \mathbf{R}$.

We can obtain a more adequate form for $\frac{|\Sigma A|^M}{|\Sigma|^M|C|^M}$ as follows

$$\frac{|\boldsymbol{\Sigma}\mathbf{A}|^M}{|\boldsymbol{\Sigma}|^M|\mathbf{C}|^M} = |\mathbf{A}|^M|\mathbf{C}^{-1}|^M$$
$$= |\mathbf{A}(\mathbf{A}^{-1} - \mathbf{I})\boldsymbol{\Sigma}^{-1}|^M \qquad (11)$$
$$= |(\mathbf{I} - \mathbf{A})\boldsymbol{\Sigma}^{-1}|^M,$$

where the equality $\mathbf{C}^{-1} = (\mathbf{A}^{-1} - \mathbf{I})\,\Sigma^{-1}$ has been used.

By comparing (8) and (10) it is possible to observe that the second part of (10) is actually the integral of a noncentral Wishart PFD and therefore its value must be 1. The final expression for $p(\mathbf{R})$ is a central Wishart as shown below

$$p(\mathbf{R}) = \frac{1}{\Gamma_K(M)|\boldsymbol{\Sigma}(\mathbf{I} - \mathbf{A})^{-1}|^M} e^{-\mathrm{tr}[(\mathbf{I}-\mathbf{A})\boldsymbol{\Sigma}^{-1}\mathbf{R}]}|\mathbf{R}|^{M-K},$$
$$(12)$$

which is $\mathbf{R} \sim W_K(M, \Sigma(\mathbf{I} - \mathbf{A})^{-1})$. Additionally, if we take into account that $\Sigma(\mathbf{I} - \mathbf{A})^{-1} = C + \Sigma$ then translates to $\mathbf{R} \sim W_K(M, \mathbf{C} + \Sigma)$.

Finally, the posterior PDF can be obtained by using Bayes' theorem and the results from (8), (9) and (12) as follows

$$p(\mathbf{G}|\mathbf{R}) = \frac{p(\mathbf{R}|\mathbf{G})p(\mathbf{G})}{p(\mathbf{R})}$$
$$= e^{-\mathrm{tr}(\mathbf{A}\boldsymbol{\Sigma}^{-1}\mathbf{R})}{}_0\tilde{F}_1(M; \boldsymbol{\Sigma}^{-1}\mathbf{R}\boldsymbol{\Sigma}^{-1}\mathbf{G}) \qquad (13)$$
$$\times \frac{1}{\Gamma_K(M)|\boldsymbol{\Sigma}A|^M} e^{-\mathrm{tr}(\mathbf{A}^{-1}\boldsymbol{\Sigma}^{-1}\mathbf{G})}|\mathbf{G}|^{M-K},$$

where the result from (11) has been used. PDF in equation (13) is a noncentral Wishart, $\mathbf{G}|\mathbf{R} \sim W_K(M, \Sigma\mathbf{A}, \mathbf{A}\Sigma^{-1}\mathbf{R})$.

Once we have presented the PDFs involved in this study we can introduce the estimators.

*B. Maximum Likelihood (ML)*

Maximum Likelihood (ML) estimate of **G** is defined as the matrix $\hat{\mathbf{G}}_{\mathrm{ML}}$, which maximizes the likelihood as follows

$$\hat{\mathbf{G}}_{\mathrm{ML}} = \arg\max_{\mathbf{G}}\{p(\mathbf{R}|\mathbf{G})\}$$
$$= \arg\max_{\mathbf{G}}\{\log[p(\mathbf{R}|\mathbf{G})]\}$$
$$= \arg\max_{\mathbf{G}}\{-\mathrm{tr}(\boldsymbol{\Sigma}^{-1}\mathbf{G}) \qquad (14)$$
$$+ \log[{}_0\tilde{F}_1(M; \boldsymbol{\Sigma}^{-1}\mathbf{G}\boldsymbol{\Sigma}^{-1}\mathbf{R})]\}.$$

If **R** has an eigenvalue decomposition $\mathbf{R} = \mathbf{U}\Lambda\mathbf{U}^H$, then we look for solutions whose form is $\mathbf{G} = \mathbf{U}\Omega\mathbf{U}^H$, where $\Omega$ and $\Lambda$ are diagonal matrices containing the eigenvalues of **G** and **R** respectively.

In the particular case that all pilots have the same power, this is $|p_k| = |p|$, $\forall k$, then without loosing generality we can set $|p| = 1$, leading to $\Sigma = N_0\mathbf{I}$, and (14) can be expressed as follows

$$\hat{\mathbf{G}}_{\mathrm{ML}} = \arg\max_{\Omega}\left\{ -\frac{1}{N_0}\mathrm{tr}(\Omega) + \log\left[{}_0\tilde{F}_1(M; \frac{1}{N_0^2}\Omega\Lambda)\right]\right\}.$$

After derivation of the argument of previous expression, the optimality condition can be expressed as

$$\frac{1}{N_0}{}_0\tilde{F}_1(M; \frac{1}{N_0^2}\Omega^*\Lambda)\mathbf{I} = \frac{\partial\,{}_0\tilde{F}_1(M; \frac{1}{N_0^2}\Omega\Lambda)}{\partial\Omega}\Big|_{\Omega=\Omega^*},$$

from where we do not continue in an analytical form.

*C. Maximum A Posteriori (MAP)*

The Maximum A Posteriori (MAP) estimate is defined as

$$\hat{\mathbf{G}}_{\mathrm{MAP}} = \arg\max_{\mathbf{G}}\{p(\mathbf{G}|\mathbf{R})\}$$
$$= \arg\max_{\mathbf{G}}\{\log[p(\mathbf{G}|\mathbf{R})]\}$$
$$= \arg\max_{\mathbf{G}}\log\left[{}_0\tilde{F}_1(M;\mathbf{\Sigma}^{-1}\mathbf{R}\mathbf{\Sigma}^{-1}\mathbf{G})\right]$$
$$- \mathrm{tr}(\mathbf{A}^{-1}\mathbf{\Sigma}^{-1}\mathbf{G}) + (M-K)\log|\mathbf{G}|.$$

If $\Sigma = N_0\mathbf{I}$ and $C = h_{\mathrm{pow}}\mathbf{I}$ then $\mathbf{A}^{-1}\mathbf{\Sigma}^{-1} = \left(\dfrac{1}{N_0} + \dfrac{1}{h_{\mathrm{pow}}}\right)\mathbf{I}$ and therefore the MAP estimate can be expressed as follows

$$\hat{\mathbf{G}}_{\mathrm{MAP}} = \arg\max_{\mu_1,\mu_2,\ldots\mu_K}\log\left[{}_0\tilde{F}_1\left(M;\frac{1}{N_0^2}\mathbf{\Omega}\mathbf{\Lambda}\right)\right]$$
$$- \left(\frac{1}{N_0} + \frac{1}{h_{\mathrm{pow}}}\right)\sum_{i=1}^{K}\mu_i + (M-K)\sum_{i=1}^{K}\log(\mu_i),$$

where $\mu_1, \mu_2, \cdots, \mu_K$ are the eigenvalues of **G**.

*D. Minimum Mean Square Error (MMSE)*

The Minimum Mean Square Error (MMSE) estimate is defined as the expectation over the posterior probability. Taking into account that **G|R** is a noncentral Wishart, that is $\mathbf{G}|\mathbf{R} \sim W_K(M, \Sigma\mathbf{A}, \mathbf{A}\Sigma^{-1}\mathbf{R})$, the expectation is known as

$$\hat{\mathbf{G}}_{\mathrm{MMSE}} = \mathbb{E}(\mathbf{G}|\mathbf{R}) = M\mathbf{\Sigma}\mathbf{A} + \mathbf{\Sigma}\mathbf{A}^2\mathbf{\Sigma}^{-1}\mathbf{R}. \qquad (15)$$

If $\mathbf{C} = h_{\mathrm{pow}}\mathbf{I}$ and $\Sigma = N_0\mathbf{I}$ then $\mathbf{A} = \dfrac{h_{\mathrm{pow}}}{h_{\mathrm{pow}}+N_0}$, and (15) can be expressed as follows

$$\hat{\mathbf{G}}_{\mathrm{MMSE}} = \frac{h_{\mathrm{pow}}N_0}{h_{\mathrm{pow}} + N_0}M\mathbf{I} + \left(\frac{h_{\mathrm{pow}}}{h_{\mathrm{pow}} + N_0}\right)^2\mathbf{R}. \qquad (16)$$

When $N_0 = 0$ then $\hat{\mathbf{G}}_{\mathrm{MMSE}} = \mathbf{R}$, which is the true value because in this particular case **R = G**. On the other hand, when $N_0 \gg h_{\mathrm{pow}}$ then $\hat{\mathbf{G}}_{\mathrm{MMSE}} \approx h_{\mathrm{pow}}M\mathbf{I}$, which is the conditional expectation of **G**, that is $\hat{\mathbf{G}}_{\mathrm{MMSE}} = (\mathbf{G}|\mathbf{R}) \approx (\mathbf{G})$, which means that **R** does not give much information about **G** in that case.

V. EQUALIZER FORMULATION AND RESULTS

The ZF equalization matrix is made up of two parts (3). There is an MRC part ($\hat{\mathbf{H}}^H$) that is implemented in a decentralized form by the antenna modules, and the second part, ($\hat{\mathbf{G}}^{-1}$), that is performed in a central processing unit. Let's define two equalizers and compare their performance. The first one, ZF based on the MMSE channel estimator from (16) is defined as

$$\mathbf{W}_{\mathrm{MMSE}} = \hat{\mathbf{G}}_{\mathrm{MMSE}}^{-1}\hat{\mathbf{H}}^H,$$

and the second one, ZF based on LS channel estimation from (6)

$$\mathbf{W}_{\mathrm{LS}} = \hat{\mathbf{G}}_{\mathrm{LS}}^{-1}\hat{\mathbf{H}}^{H}$$

which only requires a decentralized channel estimation.

*A. Channel Estimation*

In this subsection we compare the channel estimation made by these two approaches by studying the error norm as follows for MMSE

$$\epsilon_{\mathrm{MMSE}} = \mathbb{E}\,\|\hat{\mathbf{G}}_{\mathrm{MMSE}} - \mathbf{G}\|^2 \qquad (17)$$

and for LS

$$\epsilon_{\mathrm{LS}} = \mathbb{E}\,\|\hat{\mathbf{G}}_{\mathrm{LS}} - \mathbf{G}\|^2\}. \qquad (18)$$

In scenarios with low noise levels, that is $N_0 \ll 1$, (16) simplifies to $\hat{\mathsf{G}}_{\mathrm{MMSE}} \simeq \mathbf{R}$ and therefore $\epsilon_{\mathrm{MMSE}} \simeq \epsilon_{\mathrm{LS}}$. On the other hand, at high noise levels, that is $N_0 \gg h_{\mathrm{pow}}$ then $\hat{\mathsf{G}}_{\mathrm{MMSE}} \approx h_{\mathrm{pov}}M\mathbf{I}$ and $\epsilon_{\mathrm{MMSE}}$ saturates unlike $\epsilon_{\mathrm{LS}}$, that grows proportionality to $N_0$. Figure 1 shows this fact.

Fig. 1.  Channel estimation error vs. noise level for both methods, ZF and MMSE, according to (18) and (17) respectively. For low noise level both methods behave the same. For high level of noise MMSE outperforms ZF. M=100. K=16.

*β. Sum-rate*

Equation (4) can be rewritten in an equivalent form as a linear combination of user's data

$$\mathbf{y} = \sum_{i=1}^{K} \mathbf{h}_i x_i + \mathbf{n}. \qquad (19)$$

During detection stage, in order to estimate the symbol transmitted by user $k$, $x_k$, receiver needs to pre-multiply $\mathbf{y}$ by the equalization vector $\mathbf{w}_k$

$$\hat{x}_k = \mathbf{w}_k^H \mathbf{y}$$
$$= \mathbf{w}_k^H \mathbf{h}_k x_k + \sum_{i=1, i\neq k}^{K} \mathbf{w}_k^H \mathbf{h}_i x_i + \mathbf{w}_k^H \mathbf{n}. \qquad (20)$$

The instantaneous SINR for user $k$ is given by the next expression

$$\mathrm{SINR}_k = \frac{|\mathbf{w}_k^H \mathbf{h}_k|^2}{\sum_{i=1, i\neq k}^{K} |\mathbf{w}_k^H \mathbf{h}_i|^2 + N_0 \|\mathbf{w}_k\|^2}. \qquad (21)$$

The total sum-rate follows the next expression

$$R = \mathbb{E}\left\{ \sum_{k=1}^{K} \log_2\left(1 + \mathrm{SINR}_k\right) \right\}. \qquad (22)$$

Figure 2 shows the simulation results in term of sum-rates for ZF with MMSE and LS channel estimators, together with direct MMSE estimation versus SNR.

Fig. 2. Total sum-rate for ZF with both channel estimation methods, ZF and MMSE, and direct MMSE estimation according to (22). MMSE channel estimation outperforms the LS counterpart and direct MMSE estimation. SNR at base-station receiver antenna. $N_0 = 1$, $h_{\mathrm{pow}} = \mathrm{SNR}$, M=16, K=10.

VI. CONCLUSIONS

ACKNOWLEDGMENT

REFERENCES

[1] T. L. Marzetta, "Noncooperative cellular wireless with unlimited numbers of base station antennas," IEEE Transactions on Wireless Communications, vol. 9, no. 11, pp. 3590-3600, November 2010.

[2] C. Shepard et al., "Argos: Practical many-antenna base stations," in Proceedings of the 18th Annual International Conference on Mobile Computing and Networking (Mobicom), New York, NY, USA, 2012, pp. 53-64. [Online]. Available: http://doi.acm.org/10.1145/2348543.2348553

[3] S. Malkowsky et al., "The world's first real-time testbed for massive MIMO: Design, implementation, and validation," IEEE Access, vol. 5, pp. 9073-9088, 2017.

[4] K. Li, R. R. Sharan, Y. Chen, T. Goldstein, J. R. Cavallaro, and C. Studer, "Decentralized baseband processing for massive MU-MIMO systems," IEEE Journal on Emerging and Selected Topics in Circuits and Systems, vol. 7, no. 4, pp. 491-507, Dec 2017.

[5] C. Jeon, K. Li, J. R. Cavallaro, and C. Studer, "Decentralized Equalization with Feedforward Architectures for Massive MU-MIMO," ArXiv e-prints, Aug. 2018.

[6] H. Q. Ngo, E. G. Larsson, and T. L. Marzetta, "Energy and spectral efficiency of very large multiuser mimo systems," IEEE Transactions on Communications, vol. 61, no. 4, pp. 1436-1449, April 2013.

[7] A. T. James, "Distributions of matrix variates and latent roots derived from normal samples," Ann. Math. Statist., vol. 35, no. 2, pp. 475-501, 06 1964. [Online]. Available: https://doi.org/10.1214/aoms/1177703550

[8] F. Rusek, D. Persson, B. K. Lau, E. G. Larsson, T. L. Marzetta, O. Edfors, and F. Tufvesson, "Scaling up mimo: Opportunities and challenges with very large arrays," IEEE Signal Processing Magazine, vol. 30, no. 1, pp. 40-60, Jan 2013.

[9] E. Bertilsson, O. Gustafsson, and E. G. Larsson, "A scalable architecture for massive mimo base stations using distributed processing," in 2016 50th Asilomar Conference on Signals, Systems and Computers, Nov 2016, pp. 864-868.

[10] A. Zanella, M. Chiani, and M. Z. Win, "On the marginal distribution of the eigenvalues of wishart matrices," IEEE Transactions on Communications, vol. 57, no. 4, pp. 1050-1060, April 2009.

[11] M. Kang and M.. Alouini, "Largest eigenvalue of complex wishart matrices and performance analysis of mimo mrc systems," IEEE Journal on Selected Areas in Communications, vol. 21, no. 3, pp. 418-426, April 2003.

[12] K. Gross and D. Richards, "Total positivity, spherical series, and hypergeometric functions of matrix argument," IEEE Journal of Approximation Theory, no. 59, pp. 229-246, 1989.

[13] A. Gupta, Y. Sheena, and Y. Fujikoshi, "Estimation of the eigenvalues of noncentrality parameter matrix in noncentral wishart distribution," Journal of Multivariate Analysis, vol. 93, no. 1, pp. 1 - 20, 2005. [Online]. Available: http://www.sciencedirect.com/science/article/pii/S0047259X04000168

[14] P. Koev and A. Edelman, "The efficient evaluation of the hypergeometric function of a matrix argument," Math. Comp, p. 2006.

[15] Y. Sheena, A. K. Gupta, and Y. Fujikoshi, "Estimation of the eigenvalues of noncentrality parameter in matrix variate noncentral beta distribution," Annals of the Institute of Statistical Mathematics, vol. 56, no. 1, pp. 101-125, Mar 2004. [Online]. Available: https://doi.org/10.1007/BF02530527

[16] A. K. Gupta and D. K. Nagar, Matrix Variate Distributions. Monographs and Suerveys in Pure and Applied Mathematics. 104. Chapman & Hall/CRC, 2000.

**Claims**

1. A method of receiving data transmitted by a plurality of communications devices, the method comprising

   receiving at each of a plurality of M antennas reference signals transmitted by each of a plurality of K communications devices,

processing by each of a plurality of antenna modules the reference signals, each of the antenna modules being connected to a corresponding one of the plurality of antennas, the processing by each of the antenna module including

estimating for each of the K detected reference signals received from the K communications devices a sample of a radio channel through which the received signals have passed,
generating for each of the K samples of the radio channel a KxK partial matrix forming a part of a signal processing matrix for performing zero forcing equalisation of the received signals, and
transmitting via a communications interface the partial matrix KxK from each of the M antenna modules to a central processing unit, and
detecting by the central processing unit the data from the received radio signals using the MxK equalisation matrix formed by combining the KxK partial matrices from each of the M antenna modules,

wherein the transmitting the partial matrix KxK from each of the M antenna modules to the central processing unit via the communications interface comprises
transmitting each of the K columns of K complex samples of the KxK partial matrix via the communications interface sequentially.

2. The method of claim 1, wherein the transmitting each of the K columns of the K complex samples via the communications interface sequentially comprises
transmitting each of the K columns of K complex samples of the KxK partial matrix via the communications interface in a sequence of K successive time units.

3. The method of claim 1 or 2, wherein the transmitting the partial matrix KxK from each of the M antenna modules to the central processing unit via the communications interface includes
combining the KxK partial matrices from each of the M antenna modules to form an MxK equalisation matrix.

4. The method of claim 3, wherein the communications interface includes a binary tree structure and the combining the KxK partial matrices from each of the M antenna modules comprises combining the matrices as the matrices are being transmitted via the binary tree structure.

5. The method of any of claims 1 to 4, wherein the signal processing matrix is a Gramian matrix.

6. The method of any one of claims 3 to 5,

wherein the KxK partial matrices are combined using a summation point circuitry (330) when operating in a training phase,
wherein the method further comprises:

- when operating in a payload data phase: re-using the summation point circuitry.

7. The method of claim 6, further comprising:

- when operating in the payload data phase: combining a value from each of the M antenna modules using the summation point circuitry, and
- implementing error control decoding and/or Hybrid Automatic Repeat Request based on the combined values.

8. The method of any one of the preceding claims, further comprising:

- discarding the reference signals at each of the plurality of antenna modules upon said generating of the respective KxK partial matrix, while storing the KxK partial matrix for said transmitting to the central processing unit.

9. An infrastructure equipment forming part of a wireless communications network, the infrastructure equipment comprising

an array comprising a plurality of M antennas for detecting radio signals transmitted by a plurality of K communications devices via a wireless access interface

receiver circuitry configured to estimate uplink data from the detected radio signals transmitted by the plurality of K communications devices, the receiver circuitry comprising

a plurality of M antenna modules connected to a corresponding one of the plurality of antennas, and a central processing unit connected to the plurality of M antennas by a communications interface, each of the M antenna modules being configured

to estimate for each of K reference signals detected by one of the plurality of M antennas connected to the antenna module transmitted from the K communications devices a sample of a radio channel through which the received signals have passed,

to generate for each of the K samples of the radio channel a KxK partial matrix forming a part of a signal processing matrix for performing zero forcing equalisation of the received signals, and

to transmit via the communications interface the partial matrix KxK to the central processing unit, and the central processing unit is configured to detect the data from the detected radio signals using the MxK equalisation matrix formed by combining the KxK partial matrices from each of the M antenna modules,

wherein each of the antenna modules is configured to transmit the partial matrix KxK from each of the M antenna modules to the central processing unit via the communications interface by

transmitting each of the K columns of K complex samples of the KxK partial matrix via the communications interface sequentially.

10. The infrastructure equipment of claim 9, wherein the transmitting each of the K columns of the K complex samples via the communications interface sequentially comprises

transmitting each of the K columns of K complex samples of the KxK partial matrix via the communications interface in a sequence of K successive time units.

**Patentansprüche**

1. Verfahren zum Empfangen von Daten, die durch eine Vielzahl von Kommunikationsvorrichtungen übertragen werden, das Verfahren umfassend

Empfangen, an jeder einer Vielzahl von M Antennen, von Referenzsignalen, die durch jede einer Vielzahl von K Kommunikationsvorrichtungen übertragen werden,

Verarbeiten, durch jedes einer Vielzahl von Antennenmodulen, der Referenzsignale, wobei jedes der Antennenmodule mit einer entsprechenden der Vielzahl von Antennen verbunden ist, wobei das Verarbeiten durch jedes der Antennenmodule einschließt:

Abschätzen, für jedes der K erfassten Referenzsignale, die von den K Kommunikationsvorrichtungen empfangen werden, eines Abtastwerts eines Funkkanals, den die empfangenen Signale durchlaufen haben,

Erzeugen, für jeden der K Abtastwerte des Funkkanals, einer KxK-Teilmatrix, die einen Teil einer Signalverarbeitungsmatrix zum Durchführen einer Null-Erzwingungs-Entzerrung der empfangenen Signale ausbildet, und

Übertragen, über eine Kommunikationsschnittstelle, der Teilmatrix KxK von jedem der M Antennenmodule an eine zentrale Verarbeitungseinheit und

Erfassen, durch die zentrale Verarbeitungseinheit, der Daten der empfangenen Funksignale unter Verwendung der MxK-Entzerrungsmatrix, die durch Kombinieren der KxK-Teilmatrizen von jedem der M Antennenmodule ausgebildet wird,

wobei das Übertragen der Teilmatrix KxK von jedem der M Antennenmodule über die Kommunikationsschnittstelle an die zentrale Verarbeitungseinheit umfasst:

Sequenzielles Übertragen jeder der K Spalten mit K komplexen Abtastwerten der KxK-Teilmatrix über die Kommunikationsschnittstelle.

2. Verfahren nach Anspruch 1, wobei das sequenzielle Übertragen jeder der K Spalten der K komplexen Abtastwerte über die Kommunikationsschnittstelle umfasst:

Übertragen jeder der K Spalten mit K komplexen Abtastwerten der KxK-Teilmatrix über die Kommunikationsschnittstelle in einer Sequenz von K aufeinanderfolgenden Zeiteinheiten.

3. Verfahren nach Anspruch 1 oder 2, wobei das Übertragen der Teilmatrix KxK von jedem der M Antennenmodule an die zentrale Verarbeitungseinheit über die Kommunikationsschnittstelle umfasst:

Kombinieren der KxK-Teilmatrizen aus jedem der M Antennenmodule, um eine MxK-Entzerrungsmatrix auszubilden.

4. Verfahren nach Anspruch 3, wobei die Kommunikationsschnittstelle eine binäre Baumstruktur einschließt und das Kombinieren der KxK-Teilmatrizen von jedem der M Antennenmodule das Kombinieren der Matrizen, während die Matrizen über die binäre Baumstruktur übertragen werden, umfasst.

5. Verfahren nach einem der Ansprüche 1 bis 4, wobei die Signalverarbeitungsmatrix eine Gramsche Matrix ist.

6. Verfahren nach einem der Ansprüche 3 bis 5,

   wobei die KxK-Teilmatrizenunter unter Verwendung einer Summationspunktschaltlogik (330) bei einem Betrieb in einer Trainingsphase kombiniert werden,
   wobei das Verfahren ferner umfasst:

      - bei einem Betrieb in einer Nutzdatenphase: Wiederverwenden der Summationspunktschaltlogik.

7. Verfahren nach Anspruch 6, ferner umfassend:

   - bei einem Betrieb in der Nutzdatenphase: Kombinieren eines Werts von jedem der M Antennenmodule unter Verwendung der Summationspunktschaltlogik und
   - Implementieren der Fehlerkontrolldekodierung und/oder einer hybriden automatischen Wiederholungsanforderung basierend auf den kombinierten Werten.

8. Verfahren nach einem der vorstehenden Ansprüche, ferner umfassend:

   - Verwerfen der Referenzsignale an jedem der Vielzahl von Antennenmodulen nach dem Erzeugen der jeweiligen KxK-Teilmatrix, während die KxK-Teilmatrix zum Übertragen an die zentrale Verarbeitungseinheit gespeichert wird.

9. Infrastrukturausrüstung, die Teil eines drahtlosen Kommunikationsnetzwerks ausbildet, die Infrastrukturausrüstung umfassend

   eine Anordnung umfassend eine Vielzahl von M Antennen zum Erfassen von Funksignalen, die durch eine Vielzahl von K Kommunikationsvorrichtungen über eine drahtlose Zugangsschnittstelle übertragen werden,
   eine Empfängerschaltlogik, die konfiguriert ist, um Uplink-Daten aus den erfassten Funksignalen abzuschätzen, die durch die Vielzahl von K Kommunikationsvorrichtungen übertragen werden, die Empfängerschaltlogik umfassend
   eine Vielzahl von M Antennenmodulen, die mit einer entsprechenden der Vielzahl von Antennen verbunden sind, und eine zentrale Verarbeitungseinheit, die mit der Vielzahl von M Antennen durch eine Kommunikationsschnittstelle verbunden ist, wobei jedes der M Antennenmodule konfiguriert ist zum
   Abschätzen, für jedes der K Referenzsignale, die durch eine der Vielzahl von M Antennen erfasst werden, die mit dem Antennenmodul verbunden sind, die von den K Kommunikationsvorrichtungen übertragen werden, eines Abtastwerts eines Funkkanals, den die empfangenen Signale durchlaufen haben,
   Erzeugen, für jeden der K Abtastwerte des Funkkanals, einer KxK-Teilmatrix, die einen Teil einer Signalverarbeitungsmatrix zum Durchführen einer Null-Erzwingungs-Entzerrung der empfangenen Signale ausbildet, und
   Übertragen, über die Kommunikationsschnittstelle, der Teilmatrix KxK an die zentrale Verarbeitungseinheit, und
   wobei die zentrale Verarbeitungseinheit konfiguriert ist, um die Daten aus den erfassten Funksignalen unter Verwendung der MxK-Entzerrungsmatrix zu erfassen, die durch Kombinieren der KxK-Teilmatrizen aus jedem der M Antennenmodule ausgebildet wird,
   wobei jedes der Antennenmodule konfiguriert ist, um die Teilmatrix KxK von jedem der M Antennenmodule an die zentrale Verarbeitungseinheit über die Kommunikationsschnittstelle zu übertragen, durch
   Sequenzielles Übertragen jeder der K Spalten mit K komplexen Abtastwerten der KxK-Teilmatrix über die Kommunikationsschnittstelle.

10. Infrastrukturausrüstung nach Anspruch 9, wobei das sequenzielle Übertragen jeder der K Spalten der K komplexen Abtastwerte über die Kommunikationsschnittstelle umfasst:
   Übertragen jeder der K Spalten mit K komplexen Abtastwerten der KxK-Teilmatrix über die Kommunikationsschnittstelle in einer Sequenz von K aufeinanderfolgenden Zeiteinheiten.

**Revendications**

1. Procédé de réception de données transmises par une pluralité de dispositifs de communications, le procédé comprenant

   la réception, au niveau de chacune parmi une pluralité de M antennes, des signaux de référence transmis par chacun parmi une pluralité de K dispositifs de communications,
   le traitement, par chacun parmi une pluralité de modules d'antenne, des signaux de référence, chacun des modules d'antenne étant connecté à l'une correspondante parmi la pluralité d'antennes, le traitement par chacun des modules d'antenne comportant

   l'estimation, pour chacun des K signaux de référence détectés reçus en provenance des K dispositifs de communications, d'un échantillon d'un canal radio par l'intermédiaire duquel les signaux reçus sont passés,
   la génération, pour chacun des K échantillons du canal radio, d'une matrice partielle KxK faisant partie d'une matrice de traitement de signal permettant de mettre en oeuvre une égalisation de forçage à zéro des signaux reçus, et
   la transmission, par l'intermédiaire d'une interface de communications, de la matrice partielle KxK provenant de chacun des M modules d'antenne vers une unité centrale de traitement, et
   la détection, par l'unité centrale de traitement, des données provenant des signaux radio reçus à l'aide de la matrice d'égalisation MxK formée en combinant les matrices partielles KxK provenant de chacun des M modules d'antenne,
   dans lequel la transmission de la matrice partielle KxK provenant de chacun des M modules d'antenne vers l'unité centrale de traitement par l'intermédiaire de l'interface de communication comprend
   la transmission de chacune des K colonnes de K échantillons complexes de la matrice partielle KxK par l'intermédiaire de l'interface de communication de manière séquentielle.

2. Procédé selon la revendication 1, dans lequel la transmission de chacune des K colonnes des K échantillons complexes par l'intermédiaire de l'interface de communication comprend de manière séquentielle
   la transmission de chacune des K colonnes de K échantillons complexes de la matrice partielle KxK par l'intermédiaire de l'interface de communication dans une séquence de K unités de temps successives.

3. Procédé selon la revendication 1 ou 2, dans lequel la transmission de la matrice partielle KxK provenant de chacun des M modules d'antenne vers l'unité centrale de traitement par l'intermédiaire de l'interface de communications comporte
   la combinaison des matrices partielles KxK provenant de chacun des M modules d'antenne pour former une matrice d'égalisation MxK.

4. Procédé selon la revendication 3, dans lequel l'interface de communications comporte une structure d'arborescence binaire et la combinaison des matrices partielles KxK provenant de chacun des M modules d'antenne comprend la combinaison des matrices à mesure que les matrices sont transmises par l'intermédiaire de la structure d'arborescence binaire.

5. Procédé selon l'une quelconque des revendications 1 à 4, dans lequel la matrice de traitement de signal est une matrice de Gram.

6. Procédé selon l'une quelconque des revendications 3 à 5,

   dans lequel les matrices partielles KxK sont combinées à l'aide d'un système de circuits de point de sommation (330) lors du fonctionnement dans une phase d'entraînement,
   et dans lequel le procédé comprend en outre :

   - lors du fonctionnement dans une phase de données utiles : la réutilisation du système de circuits de point de sommation.

7. Procédé selon la revendication 6, comprenant en outre :

   - lors du fonctionnement dans la phase de données utiles : la combinaison d'une valeur de chacun des M modules d'antenne à l'aide du système de circuits de point de sommation, et

- l'implémentation d'un décodage de commande d'erreur et/ou d'une demande de répétition automatique hybride en fonction des valeurs combinées.

8. Procédé selon l'une quelconque des revendications précédentes, comprenant en outre :

- la mise à l'écart des signaux de référence au niveau de chacun parmi la pluralité de modules d'antenne lors de ladite génération de la matrice partielle KxK respective, tout en stockant la matrice partielle KxK pour ladite transmission vers l'unité centrale de traitement.

9. Équipement d'infrastructure faisant partie d'un réseau de communications sans fil, l'équipement d'infrastructure comprenant

un ensemble comprenant une pluralité de M antennes permettant de détecter des signaux radio transmis par une pluralité de K dispositifs de communications par l'intermédiaire d'une interface d'accès sans fil
un système de circuits récepteur configuré pour estimer des données en liaison montante à partir des signaux radio détectés transmis par la pluralité de K dispositifs de communications, le système de circuits récepteur comprenant

une pluralité de M modules d'antenne connectés à l'une correspondante parmi la pluralité d'antennes, et
une unité centrale de traitement connectée à la pluralité de M antennes par une interface de communications, chacun des M modules d'antenne étant configuré
pour estimer, pour chacun de K signaux de référence détectés par l'une parmi la pluralité de M antennes connectées au module d'antenne transmis à partir des K dispositifs de communications, un échantillon d'un canal radio par l'intermédiaire duquel les signaux reçus sont passés,
pour générer, pour chacun des K échantillons du canal radio, une matrice partielle KxK faisant partie d'une matrice de traitement de signal permettant de mettre en oeuvre une égalisation de forçage à zéro des signaux reçus, et
pour transmettre, par l'intermédiaire de l'interface de communications, la matrice partielle KxK vers l'unité centrale de traitement, et
l'unité centrale de traitement est configurée pour détecter les données provenant des signaux radio détectés à l'aide de la matrice d'égalisation MxK formée en combinant les matrices partielles KxK provenant de chacun des M modules d'antenne,
dans lequel chacun des modules d'antenne est configuré pour transmettre la matrice partielle KxK provenant de chacun des M modules d'antenne vers l'unité centrale de traitement par l'intermédiaire de l'interface de communication par
la transmission de chacune des K colonnes de K échantillons complexes de la matrice partielle KxK par l'intermédiaire de l'interface de communication de manière séquentielle.

10. Équipement d'infrastructure selon la revendication 9, dans lequel la transmission de chacune des K colonnes des K échantillons complexes par l'intermédiaire de l'interface de communication comprend de manière séquentielle la transmission de chacune des K colonnes de K échantillons complexes de la matrice partielle KxK par l'intermédiaire de l'interface de communication dans une séquence de K unités de temps successives.

Fig. 1

Core Network 210

Controlling Node

TRP

UE 260

Fig. 2

200

201 202

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Fully Decentralized Massive MIMO Detection Based on Recursive Methods. 2018 IEEE INTERNATIONAL WORKSHOP ON SIGNAL PROCESSING SYSTEMS (SIPS). IEEE, 21 October 2018, 53-58
- **SANCHEZ J R ; RUSEK F ; ALEGRIA J V.** Channel estimation for decentralized. *Massive MIMO systems*
- NR; NR and NG-RAN Overall Description; Stage 2(Release 15). *3GPP TS 38.300,* June 2018
- **HOLMA H. ; TOSKALA A.** LTE for UMTS OFDMA and SC-FDMA based radio access. John Wiley and Sons, 2009
- **T. L. MARZETTA.** Noncooperative cellular wireless with unlimited numbers of base station antennas. *IEEE Transactions on Wireless Communications,* November 2010, vol. 9 (11), 3590-3600
- **C. SHEPARD et al.** Argos: Practical many-antenna base stations. *Proceedings of the 18th Annual International Conference on Mobile Computing and Networking (Mobicom), New York, NY, USA,* 2012, 53-64, http://doi.acm.org/10.1145/2348543.2348553
- **S. MALKOWSKY et al.** he world's first real-time testbed for massive MIMO: Design, implementation, and validation. *IEEE Access,* 2017, vol. 5, 9073-9088
- **K. LI ; R. R. SHARAN ; Y. CHEN ; T. GOLDSTEIN ; J. R. CAVALLARO ; C. STUDER.** Decentralized baseband processing for massive MU-MIMO systems. *IEEE Journal on Emerging and Selected Topics in Circuits and Systems,* December 2017, vol. 7 (4), 491-507
- **C. JEON ; K. LI ; J. R. CAVALLARO ; C. STUDER.** Decentralized Equalization with Feedforward Architectures for Massive MU-MIMO. *ArXiv e-prints,* August 2018
- **H. Q. NGO ; E. G. LARSSON ; T. L. MARZETTA.** Energy and spectral efficiency of very large multiuser mimo systems. *IEEE Transactions on Communications,* April 2013, vol. 61 (4), 1436-1449
- **A. T. JAMES.** Distributions of matrix variates and latent roots derived from normal samples. *Ann. Math. Statist.,* June 1964, vol. 35 (2), 475-501, https://doi.org/10.1214/aoms/1177703550
- **F. RUSEK ; D. PERSSON ; B. K. LAU ; E. G. LARSSON ; T. L. MARZETTA ; O. EDFORS ; F. TUFVESSON.** Scaling up mimo: Opportunities and challenges with very large arrays. *IEEE Signal Processing Magazine,* January 2013, vol. 30 (1), 40-60
- **E. BERTILSSON ; O. GUSTAFSSON ; E. G. LARSSON.** A scalable architecture for massive mimo base stations using distributed processing. *2016 50th Asilomar Conference on Signals, Systems and Computers,* November 2016, 864-868
- **A. ZANELLA ; M. CHIANI ; M. Z. WIN.** On the marginal distribution of the eigenvalues of wishart matrices. *IEEE Transactions on Communications,* April 2009, vol. 57 (4), 1050-1060
- **M. KANG ; M.. ALOUINI.** Largest eigenvalue of complex wishart matrices and performance analysis of mimo mrc systems. *IEEE Journal on Selected Areas in Communications,* April 2003, vol. 21 (3), 418-426
- **K. GROSS ; D. RICHARDS.** Total positivity, spherical series, and hypergeometric functions of matrix argument. *IEEE Journal of Approximation Theory,* 1989, vol. 59, 229-246
- **A. GUPTA ; Y. SHEENA ; Y. FUJIKOSHI.** Estimation of the eigenvalues of noncentrality parameter matrix in noncentral wishart distribution. *Journal of Multivariate Analysis,* vol. 93 (1), 1-20, 2005, http://www.sciencedirect.com/science/article/pii/S0047259X04000168
- **P. KOEV ; A. EDELMAN.** The efficient evaluation of the hypergeometric function of a matrix argument. *Math. Comp,* 2006
- **Y. SHEENA ; A. K. GUPTA ; Y. FUJIKOSHI.** Estimation of the eigenvalues of noncentrality parameter in matrix variate noncentral beta distribution. *Annals of the Institute of Statistical Mathematics,* March 2004, vol. 56 (1), 101-125, https://doi.org/10.1007/BF02530527
- **A. K. GUPTA ; D. K. NAGAR.** Matrix Variate Distributions. Monographs and Suerveys in Pure and Applied Mathematics. Chapman & Hall/CRC, 2000, vol. 104